# EUROPÄISCHE PATENTSCHRIFT

(11) **EP 3 224 095 B1**
(45) Veröffentlichungstag und Bekanntmachung des Hinweises auf die Patenterteilung: **13.02.2019**
(21) Anmeldenummer: 15797312.4
(22) Anmeldetag: 18.11.2015
(51) Int. Cl.: B60S 3/04, B60S 3/06

(54) **PORTALWASCHANLAGE UND VERFAHREN ZUM REINIGEN EINES KRAFTFAHRZEUGES**
GANTRY WASHING INSTALLATION AND METHOD FOR CLEANING A MOTOR VEHICLE
INSTALLATION DE LAVAGE À PORTIQUE ET PROCÉDÉ DE NETTOYAGE D'UN VÉHICULE AUTOMOBILE

(30) Priorität: 24.11.2014 DE 102014117167
(43) Veröffentlichungstag der Anmeldung: 04.10.2017
(73) Patentinhaber: Alfred Kärcher SE & Co. KG, 71364 Winnenden (DE)
(72) Erfinder: METTANG, Bruno, 71409 Schwaikheim (DE)
(74) Vertreter: Hoeger, Stellrecht & Partner Patentanwälte mbB
(86) Internationale Anmeldenummer: PCT/EP2015/076986
(87) Internationale Veröffentlichungsnummer: WO 2016/083213

(56) Entgegenhaltungen:
- EP-A1- 2 332 793
- EP-A2- 1 795 409

## Beschreibung

Die Erfindung betrifft eine Portalwaschanlage, die relativ zu einem zu reinigenden Kraftfahrzeug längs einer Behandlungsrichtung beweglich ist und eine portalförmige Trageinrichtung aufweist, an der mindestens eine Karosseriebürste zum Reinigen einer Endseite des Kraftfahrzeuges sowie mindestens eine Radwaschbürste zum Reinigen eines Rades des Kraftfahrzeuges gehalten sind, wobei die mindestens eine Karosseriebürste und/oder die mindestens eine Radwaschbürste längs der Behandlungsrichtung beweglich an der Trageinrichtung gehalten und mit mindestens einer Antriebseinheit relativ zur Trageinrichtung beweglich ist/sind.

Außerdem betrifft die Erfindung ein Verfahren zum Reinigen eines Kraftfahrzeuges mit einer Portalwaschanlage.

Eine Portalwaschanlage kann in einer Behandlungsrichtung relativ zu einem stationären, zu reinigenden Kraftfahrzeug bewegt werden. Das Kraftfahrzeug ist üblicherweise so an der Portalwaschanlage positioniert, dass die Kraftfahrzeuglängsrichtung parallel zur Behandlungsrichtung ausgerichtet ist. Mit der mindestens einen Karosseriebürste kann die Endseite des Kraftfahrzeuges gereinigt werden, und mit der mindestens einen Radwaschbürste das Rad des Kraftfahrzeuges. Die Karosseriebürste ist zum Beispiel eine Seitenbürste, die während der Bewegung der Trageinrichtung in Behandlungsrichtung eine Seite des Kraftfahrzeuges abreinigt. Zum Abreinigen der Endseite kann die Seitenbürste von einer ausgefahrenen, seitlichen Stellung in eine eingefahrene, mittlere Stellung überführt werden und die Endseite des Kraftfahrzeuges kontaktieren. Bei der Karosseriebürste kann es sich auch um eine Dachbürste handeln, die die Endseite des Kraftfahrzeuges in einer abgesenkten Stellung kontaktiert und in einer angehobenen Stellung über das Kraftfahrzeug hinweg bewegt wird, wenn die Trageinrichtung in der Behandlungsrichtung verfahren wird.

Eine derartige Portalwaschanlage ist zum Beispiel in der DE 20 2013 103 562 U1 beschrieben.

Die EP 2 332 792 A1 beschreibt eine Radwascheinrichtung mit mindestens einer um eine Rotationsachse rotierenden Bürste, die in vertikaler und in horizontaler Richtung bewegbar ist.

Aufgabe der vorliegenden Erfindung ist es, eine Portalwaschanlage der eingangs genannten Art bereitzustellen, mit der ein besseres Reinigungsergebnis erzielbar ist.

Diese Aufgabe wird bei einer gattungsgemäßen Portalwaschanlage erfindungsgemäß dadurch gelöst, dass die mindestens eine Karosseriebürste und die mindestens eine Radwaschbürste in eine Relativstellung bringbar sind, in der die Endseite des Kraftfahrzeuges und das Rad des Kraftfahrzeuges gleichzeitig reinigbar sind, welches Rad einer Radachse des Kraftfahrzeuges zugeordnet ist, die der Endseite zugewandt ist.

Bei der erfindungsgemäßen Portalwaschanlage ist es möglich, die mindestens eine Karosseriebürste und die mindestens eine Radwaschbürste, bezogen auf die Behandlungsrichtung, in unterschiedlichen Abstand voneinander zu bringen. Dies gibt die Möglichkeit, die Portalwaschanlage an das Fahrzeug anzupassen. Insbesondere kann die Relativstellung der mindestens einen Karosseriebürste und der mindestens einen Radwaschbürste an das Fahrzeug angepasst werden, beispielsweise an dessen Kontur oder dessen Typ. Dadurch kann ein besseres Reinigungsergebnis erzielt werden. Die mindestens eine Karosseriebürste kann die Endseite des Kraftfahrzeuges mit einem waschwirksamen Bereich kontaktieren. Zugleich kann die Radwaschbürste so relativ zum Rad ausgerichtet werden, dass insbesondere eine möglichst große Flächendeckung mit diesem erzielt wird. Beispielsweise wird die Radwaschbürste koaxial oder im Wesentlichen koaxial zum Rad ausgerichtet. Besonders vorteilhafterweise können die Endseite des Kraftfahrzeuges und das Rad gleichzeitig gereinigt werden. Die Dauer der Abreinigung der Endseite des Kraftfahrzeuges kann genutzt werden, das Rad zu reinigen. Gegenüber einer herkömmlichen Portalwaschanlage besteht die Möglichkeit der Zeitersparnis. Die Gesamtdauer des Reinigungsprogrammes kann verringert werden, weil die Bewegung der Trageinrichtung relativ zum Fahrzeug nicht unterbrochen zu werden braucht, um das Rad zu reinigen.

Bei der Endseite des Fahrzeuges kann es sich um dessen Vorderseite oder um dessen Rückseite handeln, bei dem zu reinigenden Rad bevorzugt um das Rad einer Radachse, die der Vorderseite zugewandt ist (Vorderachse) bzw. der Rückseite zugewandt ist (Hinterachse).

Es ist dementsprechend bei einer erfindungsgemäßen Ausführungsform der Portalwaschanlage vorgesehen, dass die mindestens eine Karosseriebürste und die mindestens eine Radwaschbürste in eine Relativstellung bringbar sind, in der die Endseite des Kraftfahrzeuges und das Rad des Kraftfahrzeuges gleichzeitig reinigbar sind, welches Rad einer Radachse des Kraftfahrzeuges zugeordnet ist, die der Endseite zugewandt ist.

Weiter ist es günstig, wenn die Portalwaschanlage so ausgebildet ist, das bei Reinigung einer vorderen Endseite des Kraftfahrzeuges mindestens ein Vorderrad des Kraftfahrzeuges gleichzeitig reinigbar ist und/oder wenn bei Reinigung einer hinteren Endseite des Kraftfahrzeuges mindestens ein Hinterrad des Kraftfahrzeuges gleichzeitig reinigbar ist.

Die mindestens eine Karosseriebürste und/oder die mindestens eine Radwaschbürste ist/sind in Behandlungsrichtung vorteilhafterweise verschiebbar relativ zur Trageinrichtung, beispielsweise verschiebbar an der Trageinrichtung gelagert. Beispielsweise ist vorgesehen, dass die Portalwaschanlage eine Karosseriebürsteneinrichtung aufweist, die die mindestens eine Karosseriebürste umfasst sowie einen Drehantrieb, mit dem diese drehend antreibbar ist. Die Karosseriebürsteneinrichtung kann ferner ein beispielsweise längenveränderliches Halteteil umfassen, über das die Karosseriebürste an der Trageinrichtung gehalten ist. Am Halteteil kann beispielsweise die Antriebseinheit zum Verschieben der Karosseriebürste längs der Behandlungsrichtung vorgesehen sein.

Günstig ist es, wenn die mindestens eine Karosseriebürste relativ zur Trageinrichtung längs der Behandlungsrichtung um bis zu 2 m beweglich ist.

Alternativ oder ergänzend ist es von Vorteil, wenn die mindestens eine Radwaschbürste relativ zur Trageinrichtung längs der Behandlungsrichtung um bis zu 1 m beweglich ist.

Die mindestens eine Antriebseinheit kann auf unterschiedliche Weise ausgestaltet sein, zum Beispiel mechanisch, elektrisch, hydraulisch, magnetisch und/oder pneumatisch. Auch eine Kombination dieser Funktionsprinzipien ist denkbar. Sind sowohl die mindestens eine Karosseriebürste als auch die mindestens eine Radwaschbürste beweglich an der Trageinrichtung gehalten, kann vorgesehen sein, dass unterschiedliche oder gleichartige Funktionsprinzipien für die jeweilige Antriebseinheit zum Einsatz kommen.

Günstig ist es, wenn die mindestens eine Antriebseinheit so ausgebildet ist, dass die mindestens eine Karosseriebürste und/oder die mindestens eine Radwaschbürste längs der Behandlungsrichtung in unterschiedliche diskrete Abstände relativ zur Trageinrichtung bringbar ist/sind.

Alternativ oder ergänzend ist denkbar, dass die Abstandsänderung der mindestens einen Karosseriebürste und/oder der mindestens einen Radwaschbürste zur Trageinrichtung längs der Behandlungsrichtung stufenlos oder im Wesentlichen stufenlos veränderbar ist.

Sind sowohl die mindestens eine Karosseriebürste als auch die mindestens eine Radwaschbürste beweglich längs der Behandlungsrichtung an der Trageinrichtung gehalten, kann vorgesehen sein, dass die Bürsten gleichzeitig und insbesondere synchron bewegt werden. Denkbar ist auch eine Bewegung der Bürsten getrennt voneinander, beispielsweise nacheinander.

Die Portalwaschanlage weist vorzugsweise zwei Radwaschbürsten auf, die an einander gegenüberliegenden Seiten bezogen auf eine Richtung quer zur Behandlungsrichtung an der Trageinrichtung angeordnet sind, wobei vorzugsweise beide Radwaschbürsten in Behandlungsrichtung relativ zur Trageinrichtung beweglich sind. Durch die zwei Radwaschbürsten können zwei Räder derselben Radachse gleichzeitig abgereinigt werden. Vorzugsweise sind beide Radwaschbürsten relativ zur Trageinrichtung beweglich und in unterschiedliche Relativstellung bezüglich der Behandlungsrichtung mit zumindest einer Karosseriebürste bringbar.

Die mindestens eine Karosseriebürste kann insbesondere eine in Höhenrichtung ausgerichtete Seitenbürste sein, die an der Trageinrichtung quer zur Behandlungsrichtung einfahrbar und ausfahrbar ist, und mit der die Endseite des Kraftfahrzeuges in einer eingefahrenen Stellung reinigbar ist. Die Karosseriebürste weist vorzugsweise eine in Höhenrichtung und insbesondere vertikal ausgerichtete Drehachse auf. Es kann vorgesehen sein, dass die Karosseriebürste an einem Drehlager taumelbar gehalten ist, so dass sie sich auf bessere Weise beim Reinigen des Fahrzeugs an dessen Karosserie anlegen kann. Zusätzlich ist die Karosseriebürste von einer ausgefahrenen Stellung, an der sie das Kraftfahrzeug seitlich außen kontaktieren kann, in mindestens eine eingefahrene Stellung und umgekehrt überführbar. In der eingefahrenen Stellung kann die Seitenbürste das Kraftfahrzeug an der Endseite kontaktieren, beispielsweise an dessen mittlerem Bereich, so dass die Endseite abgereinigt werden kann. In der eingefahrenen Stellung kann die Seitenbürste beispielsweise quer zur Behandlungsrichtung hin- und herbewegt werden, um die Endseite zu reinigen.

Vorzugsweise ist die Seitenbürste längs der Behandlungsrichtung beweglich an der Trageinrichtung gehalten, insbesondere verschieblich relativ zu dieser oder verschieblich an dieser gelagert.

Die Portalwaschanlage weist bevorzugt zwei Seitenbürsten auf, die an einander gegenüberliegenden Seiten bezogen auf die Richtung quer zur Behandlungsrichtung an der Trageinrichtung gehalten sind, und günstigerweise sind beide Seitenbürsten von einer jeweiligen eingefahrenen in eine jeweilige ausgefahrene Stellung bewegbar zum Reinigen der Endseite des Kraftfahrzeuges. In der jeweiligen ausgefahrenen Stellung wird das Kraftfahrzeug von den Seitenbürsten seitlich abgereinigt, wenn die Trageinrichtung längs der Behandlungsrichtung bewegt wird. In der jeweiligen mindestens einen eingefahrenen Stellung wird das Kraftfahrzeug an der Endseite - Vorderseite oder Rückseite - gereinigt.

Vorzugsweise sind beide Seitenbürsten in Behandlungsrichtung relativ zur Trageinrichtung beweglich.

Von Vorteil ist es, wenn die Portalwaschanlage in Behandlungsrichtung an einander gegenüberliegenden Seiten der mindestens einen Radwaschbürste zwei Karosseriebürsten aufweist - beispielsweise zwei Seitenbürsten - zum Reinigen einander abgewandter Endseiten des Kraftfahrzeuges und wenn mindestens eine Karosseriebürste längs der Behandlungsrichtung beweglich an der Trageinrichtung gehalten und mit einer jeweiligen Antriebseinheit relativ zu dieser beweglich ist. Dies gibt die Möglichkeit, zum Beispiel die Vorderseite des Fahrzeuges und das Rad der Vorderachse gleichzeitig abzureinigen, wobei eine erste Karosseriebürste und die Radwaschbürste in Behandlungsrichtung eine solche Relativstellung einnehmen, dass gleichzeitig die Vorderseite kontaktiert und das Vorderrad in Überdeckung mit der Radwaschbürste gebracht werden kann. Außerdem kann die Rückseite des Fahrzeuges und gleichzeitig ein Hinterrad abgereinigt werden, wenn die zweite Karosseriebürste und die Radwaschbürste längs der Behandlungsrichtung in eine solche Relativstellung gebracht werden, dass gleichzeitig die Hinterseite kontaktiert und das Hinterrad mit der Radwaschbürste in Überdeckung gebracht werden können.

Es kann auch vorgesehen sein, dass die mindestens eine Karosseriebürste eine quer zur Behandlungsrichtung ausgerichtete Dachbürste ist, die in einer Höhenrichtung der Trageinrichtung anhebbar und absenkbar ist und mit der die Endseite des Kraftfahrzeuges in einer abgesenkten Stellung reinigbar ist. Zum Kontaktieren der Endseite kann die Dachbürste abgesenkt sein und die Endseite - Vorderseite oder Rückseite - kontaktieren. Zum Reinigen des Kraftfahrzeuges von oben kann die Dachbürste angehoben und bei der Bewegung der Trageinrichtung über das Fahrzeug geführt werden. Die Dachbürste kann insbesondere längs der Behandlungsrichtung beweglich an der Trageinrichtung gehalten sein.

Günstig ist es, wenn die Portalwaschanlage eine Steuereinheit umfasst und eine mit dieser gekoppelte Erfassungseinheit, mit der ein Abstand der Endseite des Kraftfahrzeuges und des Rades voneinander längs der Behandlungsrichtung bestimmbar ist, und wenn die Steuereinheit mit der mindestens einen Antriebseinheit gekoppelt ist und die Relativstellung der mindestens einen Karosseriebürste und der mindestens einen Radwaschbürste bezüglich der Behandlungsrichtung abhängig vom Abstand einstellbar ist. Dies erlaubt es, die mindestens eine Karosseriebürste und die Radwaschbürste so in eine Relativstellung zu bringen (längs der Behandlungsrichtung), dass die mindestens eine Karosseriebürste die Endseite des Kraftfahrzeuges mit einem waschwirksamen Bereich kontaktiert und zugleich eine möglichst große Überdeckung der Radwaschbürste mit dem Rad möglich ist. Dies erlaubt es, gleichzeitig die Endseite und das Rad zu reinigen. Unter Zeitersparnis für das Reinigungsprogramm kann dadurch ein gutes Reinigungsergebnis erzielt werden.

Unter dem "Abstand" der Endseite und des Rades voneinander kann beispielsweise der Abstand der Endseite von einer Radachse verstanden werden. Die Lage der Radachse wird zum Beispiel ermittelt, indem die Kontur des Rades erfasst wird, beispielsweise optisch und/oder taktil, und anhand der Kontur die Lage der Achse berechnet wird.

Die Erfassungseinheit kann auf vielfältige Weise ausgestaltet sein. Beispielsweise ist eine optische Erfassungseinheit möglich, insbesondere mit Lichtschranken und/oder Lichtvorhängen. Insbesondere über eine optische Erfassungseinheit wird beispielsweise die Kontur des Kraftfahrzeuges erfasst und die Lage der Räder relativ zu den Endseiten ermittelt.

Alternativ oder ergänzend kann eine taktile Erfassungseinheit vorgesehen sein. Mit der taktilen Erfassungseinheit, die hierfür entsprechende Fühler aufweisen kann, lässt sich zum Beispiel die Lage der Endseiten und der Räder des Kraftfahrzeuges ertasten.

Als vorteilhaft wird angesehen, wenn der Abstand anhand eines erkannten oder vorgebbaren Typs des Kraftfahrzeuges ermittelbar ist, wobei der Typ des Kraftfahrzeuges mittels der Erfassungseinheit erfassbar und/oder mittels einer mit der Erfassungseinheit gekoppelten Eingabeeinheit von einer Bedienperson vorgebbar ist. Beispielsweise wird mit einer optischen Erfassungseinheit der Typ (das Modell) des Kraftfahrzeuges erkannt. Aus einer Speichereinheit kann die Geometrie des Kraftfahrzeuges ausgelesen und dadurch der Abstand der Endseite des Kraftfahrzeuges und des Rades voneinander bestimmt werden.

Denkbar ist auch, dass die Bedienperson an einer mit der Steuereinheit gekoppelten Bedieneinheit den Typ des Kraftfahrzeuges vorgibt, zum Beispiel bei der Wahl eines Reinigungsprogramms oder der Aktivierung der Portalwaschanlage. Anhand des vorgegebenen Typs kann die Steuereinheit ebenfalls aus der Speichereinheit die Geometrie des Kraftfahrzeuges auslesen, um den Abstand zu bestimmen.

Es kann vorgesehen sein, dass der Abstand vor der Abarbeitung eines Reinigungsprogrammes bestimmbar ist. Beispielsweise wird der Abstand ermittelt, wenn die Bedienperson das Kraftfahrzeug an die Portalwaschanlage heranfährt oder in einer Solllage relativ zu dieser abgestellt hat, bevor das Reinigungsprogramm beginnt.

Denkbar ist auch, dass der Abstand ermittelt wird, während die Portalwaschanlage, beispielsweise zum Besprühen mit einer Reinigungsflüssigkeit, über das Kraftfahrzeug hinwegbewegt wird. Vor einer weiteren Überfahrt zum Zweck der Bürstenreinigung, bei der die mindestens eine Karosseriebürste und die mindestens eine Radwaschbürste zum Einsatz kommen, kann deren Relativstellung längs der Behandlungsrichtung an den Abstand angepasst werden.

Denkbar ist auch, dass der Abstand während der Abarbeitung eines Reinigungsprogrammes der Portalwaschanlage bestimmbar ist. Beispielsweise kann vorgesehen sein, dass bei vergleichsweise kurzen Kraftfahrzeugen erkannt wird, dass die Radwaschbürste in Überdeckung mit einem Rad des Kraftfahrzeuges ist, die mindestens eine Karosseriebürste aber noch einen Abstand von der Endseite aufweist. Die Antriebseinrichtung kann aktiviert werden, um die mindestens eine Karosseriebürste in geringeren Abstand zur Radwaschbürste zu bringen und die Endseite zu kontaktieren, so dass diese und das Rad gleichzeitig abgereinigt werden können. Bei vergleichsweise langen Kraftfahrzeugen kann sich die Situation ergeben, dass die mindestens eine Karosseriebürste die Endseite kontaktiert, die mindestens eine Radwaschbürste aber noch nicht in hinreichend guter Überdeckung mit dem Rad ist. Die Antriebseinheit kann aktiviert werden, um die Radwaschbürste längs der Behandlungsrichtung zu bewegen und in Überdeckung mit dem Rad zu bringen, so dass das Rad und die Endseite gleichzeitig abgereinigt werden können.

Bei einer vorteilhaften Umsetzung der erfindungsgemäßen Portalwaschanlage kann beispielsweise vorgesehen sein, dass ein Motorstrom eines Drehantriebs der mindestens einen Karosseriebürste erfassbar und abhängig vom Motorstrom detektierbar ist, dass die Karosseriebürste die Endseite kontaktiert und dass mit einer bevorzugt optischen oder taktilen Erfassungseinheit die Position des Rades erfassbar und die Relativstellung der mindestens einen Karosseriebürste und der mindestens einen Radwaschbürste bezüglich der Behandlungsrichtung abhängig vom Signal der Erfassungseinheit einstellbar ist. Beispielsweise kann mindestens eine Seitenbürste von einer ausgefahrenen in eine eingefahrene Stellung überführt werden. Kontaktiert die Seitenbürste die Endseite im drehenden Zustand, steigt der Motorstrom an. Anhand des Anstiegs des Motorstroms kann die Steuereinheit feststellen, dass die Seitenbürste die Endseite kontaktiert. Zusätzlich kann erfasst werden, insbesondere mit einer optischen oder einer taktilen Erfassungseinheit, ob die Radwaschbürste relativ zum Rad so ausgerichtet ist, dass eine möglichst gute Überdeckung erzielt werden kann. Ist dies nicht der Fall, kann die Antriebseinheit aktiviert werden und die Radwaschbürste relativ zur Trageinrichtung bewegt und in möglichst gute Überdeckung mit dem Rad gebracht werden. Alternativ oder ergänzend kann die Antriebseinheit aktiviert werden und die Seitenbürste relativ zur Trageinrichtung bewegt werden, wodurch auch die Radwaschbürste relativ zur Seitenbürste bewegt und in Überdeckung mit dem Rad gebracht werden kann.

Wie eingangs erwähnt, betrifft die Erfindung auch ein Verfahren zum Reinigen eines Kraftfahrzeuges. Aufgabe der vorliegenden Erfindung ist es, ein Verfahren zum Reinigen eines Kraftfahrzeuges bereitzustellen, mit dem ein besseres Reinigungsergebnis erzielt werden kann.

Diese Aufgabe wird erfindungsgemäß gelöst durch ein Verfahren zum Reinigen eines Kraftfahrzeuges mit einer Portalwaschanlage der vorstehend genannten Art, bei welchem Verfahren bei einem zu reinigenden Kraftfahrzeug ein Abstand der Endseite des Kraftfahrzeuges und des Rades des Kraftfahrzeuges voneinander längs der Behandlungsrichtung bestimmt wird und die Karosseriebürste und/oder die Radwaschbürste längs der Behandlungsrichtung relativ zur Trageinrichtung bewegt wird/werden und die Endseite sowie das Rad des Kraftfahrzeuges gleichzeitig gereinigt werden.

Die bereits im Zusammenhang mit der Erläuterung der erfindungsgemäßen Portalwaschanlage erwähnten Vorteile können unter Einsatz des Verfahrens ebenfalls erzielt werden. Diesbezüglich kann auf die vorangegangenen Ausführungen verwiesen werden.

Vorteilhafte Ausführungsbeispiele des erfindungsgemäßen Verfahrens können sich durch die Merkmale vorteilhafter Ausführungsformen der erfindungsgemäßen Portalwaschanlage ergeben. Diesbezüglich wird zur Vermeidung von Wiederholungen ebenfalls auf vorangegangene Ausführungen verwiesen.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Darstellung einer ersten bevorzugten Ausführungsform einer erfindungsgemäßen Portalwaschanlage, mit der ein vorteilhaftes Ausführungsbeispiel eines erfindungsgemäßen Verfahrens durchführbar ist;
- Figur 2:: ein Blockdiagramm von Komponenten der Portalwaschanlage aus Figur 1;
- Figur 3:: die Portalwaschanlage aus Figur 1 und ein zu reinigendes Kraftfahrzeug vor Beginn des Reinigungsprogramms;
- Figur 4:: eine Darstellung entsprechend Figur 3 während des Reinigungsprogramms;
- Figur 5:: eine weitere Darstellung entsprechend Figur 3 während des Reinigungsprogramms;
- Figur 6:: eine weitere Darstellung der Portalwaschanlage aus Figur 1 mit einem andersartigen zu reinigenden Fahrzeug vor Beginn des Reinigungsprogramms;
- Figur 7:: eine Darstellung entsprechend Figur 6 während des Reinigungsprogramms;
- Figur 8:: eine zweite bevorzugte Ausführungsform einer erfindungsgemäßen Portalwaschanlage zur Durchführung eines vorteilhaften Ausführungsbeispiels des erfindungsgemäßen Verfahrens und ein weiteres zu reinigendes Fahrzeug vor Beginn des Reinigungsprogramms;
- Figur 9:: eine Darstellung entsprechend Figur 8 während des Reinigungsprogramms und
- Figur 10:: eine weitere Darstellung entsprechend Figur 8 während des Reinigungsprogramms.

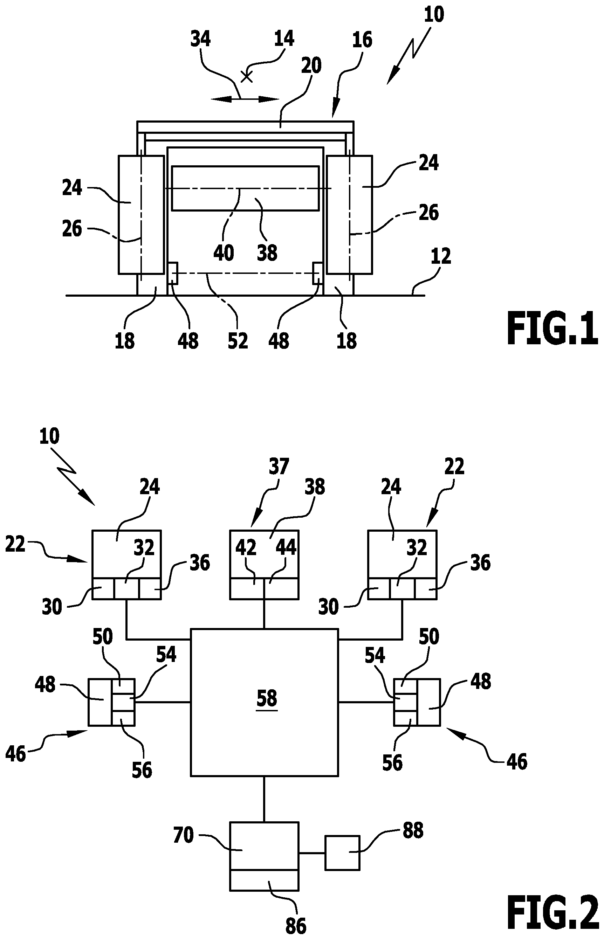

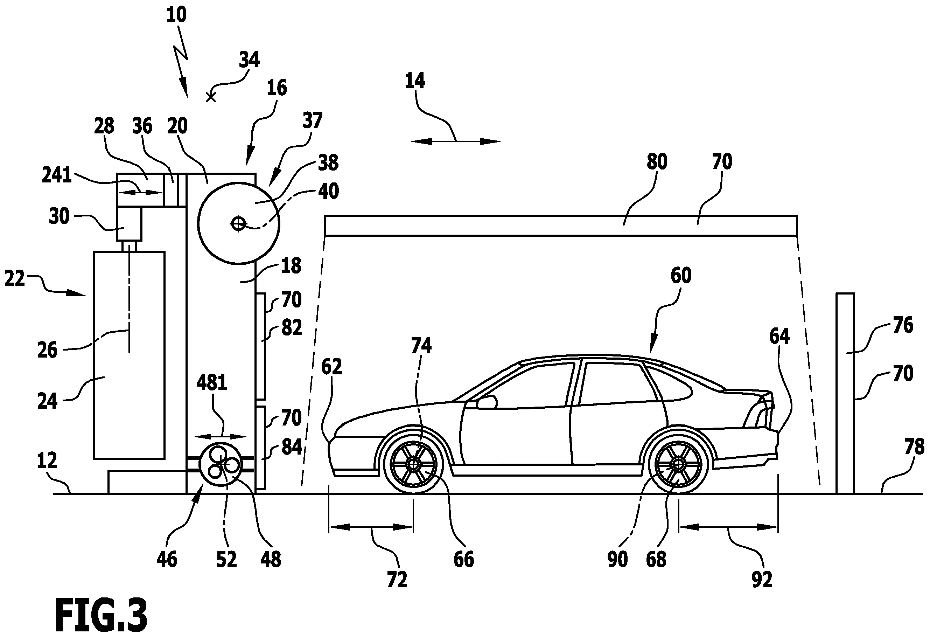

Figur 1 zeigt eine mit dem Bezugszeichen 10 belegte vorteilhafte Ausführungsform einer erfindungsgemäßen Portalwaschanlage. Die Portalwaschanlage 10 ist auf einer Aufstellfläche 12 positioniert und relativ zu dieser längs einer Behandlungsrichtung 14 beweglich. Beispielsweise ist die Portalwaschanlage 10 längs der Behandlungsrichtung 14 verschieblich gelagert, wofür hierfür ein an sich bekannter, in der Zeichnung nicht dargestellter Antrieb vorhanden ist. In Figur 1 ist die Behandlungsrichtung 14 senkrecht zur Zeichenebene ausgerichtet, in den Figuren 3 bis 10 verläuft die Behandlungsrichtung 14 in der Zeichenebene.

Ein zu reinigendes Fahrzeug ist üblicherweise mit der Längsrichtung parallel zur Behandlungsrichtung 14 ausgerichtet.

Die Portalwaschanlage 10 umfasst eine portalförmige Trageinrichtung 16 mit zwei in Höhenrichtung erstreckten Trägern 18, beispielsweise vertikal ausgerichtet. Die Träger 18 sind voneinander beabstandet und obenseitig über einen Querträger 20, insbesondere horizontal ausgerichtet, miteinander verbunden.

Positions- und Orientierungsangaben wie beispielsweise "oben", "unten", "horizontal", "vertikal" oder dergleichen sind vorliegend auf einen Betriebszustand der Portalwaschanlage 10 bezogen aufzufassen, wobei diese als auf einer als horizontal angesehenen Aufstellfläche 12 positioniert ist.

Die Portalwaschanlage 10 umfasst bei einer bevorzugten Ausführung zwei Bürsteneinrichtungen 22, mit einer jeweiligen Karosseriebürste in Gestalt einer Seitenbürste 24. Jede Seitenbürste 24 ist in Höhenrichtung ausgerichtet und definiert eine in vertikaler Richtung verlaufende Drehachse 26. Die Bürsteneinrichtung 22 umfasst ferner ein Halteteil 28 für die Seitenbürste 24 (Figuren 3 bis 5). Das Halteteil 28 ist an der Trageinrichtung 16 festgelegt und zum Beispiel längenveränderlich oder verschiebbar an der Trageinrichtung 16 gelagert.

Die Bürsteneinrichtung 22 weist ferner einen Drehantrieb 30 für die Seitenbürste 24 auf, so dass diese um die Drehachse 26 drehend angetrieben werden kann.

Weiter umfasst die Bürsteneinrichtung 24 einen Verschiebeantrieb 32. Über den Verschiebeantrieb 32 kann die Bürsteneinrichtung 22 und damit die Seitenbürste 24 quer zur Behandlungsrichtung 14 verschoben werden. Dies entspricht einer Querrichtung 34 der Trageinrichtung 16.

Die Seitenbürste 24 ist dadurch von einer ausgefahrenen Stellung, in der sie ein zu reinigendes Kraftfahrzeug seitlich kontaktieren kann, in eine eingefahrene Stellung und umgekehrt überführbar. In der eingefahrenen Stellung kann die Seitenbürste 24 in Richtung einer Mitte des Kraftfahrzeuges verschoben werden, um dessen Endseite - Vorderseite oder Rückseite - zu kontaktieren und abzureinigen. Beispielsweise wird die Seitenbürste 24 zur Reinigung der Endseite hin- und herbewegt. Figur 1 zeigt die Seitenbürste 24 in der ausgefahrenen Stellung. Die schematischen Darstellungen der Figuren 3 bis 9 zeigen die Seitenbürste 24 in der eingefahrenen Stellung.

Der Drehantrieb 30 könnte auch an der Trageinrichtung 16 angeordnet sein.

Die Bürsteneinrichtung 22 umfasst ferner eine Antriebseinheit 36. Die Antriebseinheit 36 ist vorzugsweise am Halteteil 28 angeordnet. Über die Antriebseinheit 36 kann die Seitenbürste 24 längs der Behandlungsrichtung 14 relativ zur Trageinrichtung 16 bewegt werden. Insbesondere ist die Seitenbürste 24 über das Halteteil 28 verschieblich bezüglich der Trageinrichtung 16. Die Seitenbürste 24 kann dadurch in unterschiedlichen Abstand zur Trageinrichtung 16 gebracht werden (Pfeil 241 in der Zeichnung).

Die Bürsteneinrichtungen 22 sind an einem jeweiligen der Träger 18 angeordnet. Soweit nachfolgend auf nur eine der Bürsteneinrichtungen 22 Bezug genommen wird, gilt dies auch für die jeweilige andere Bürsteneinrichtung 22.

Die Portalwaschanlage 10 umfasst ferner eine weitere Bürsteneinrichtung 37 mit einer Karosseriebürste in Gestalt einer Dachbürste 38. Die Dachbürste 38 ist an der Trageinrichtung 16 um eine horizontal ausgerichtete Drehachse 40 drehbar gehalten. Der Dachbürste 38 ist ein Drehantrieb 42 zugeordnet. Über einen weiteren Hubantrieb 44 kann die Dachbürste 38 angehoben und abgesenkt werden und ein zu reinigendes Kraftfahrzeug obenseitig kontaktieren.

Weiter umfasst die Portalwaschanlage 10 zwei Bürsteneinrichtungen 46. Die Bürsteneinrichtungen 46 umfassen jeweils eine Radwaschbürste 48. Die Radwaschbürste 48 kann eine Mehrzahl von Einzelbürsten mit Reinigungsborsten aufweisen. Vorliegend sind zum Beispiel drei Einzelbürsten vorhanden.

Die Radwaschbürste 48 ist an der Trageinrichtung 16 gehalten, insbesondere an einem Träger 18. Mittels eines Drehantriebs 50 kann die Radwaschbürste 48 um eine horizontal ausgerichtete Drehachse 52 drehend angetrieben werden. Ein weiterer Verschiebeantrieb 54 kann vorgesehen sein, um die Radwaschbürste 48 axial in Richtung des jeweils anderen Trägers 18 zu verschieben. Dies gibt die Möglichkeit, die Radwaschbürste 48 auf das zu reinigende Rad zuzubewegen und in Kontakt mit diesem zu bringen.

Weiter umfasst die Bürsteneinrichtung 46 eine Antriebseinheit 56. Über die Antriebseinheit 56 kann die Radwaschbürste 48 längs der Behandlungsrichtung 14 relativ zur Trageinrichtung 16 bewegt werden. Insbesondere ist die Radwaschbürste 48 an der Trageinrichtung 16 verschiebbar gelagert (Pfeil 481 in der Zeichnung).

Soweit vorliegend auf nur eine Bürsteneinrichtung 46 Bezug genommen wird, gilt dies auch für die jeweils andere Bürsteneinrichtung 46.

Die Antriebseinheiten 36 und 56 können vielfältig ausgestaltet sein, hierbei kann es sich beispielsweise um mechanische, elektrische, magnetische, hydraulische und/oder pneumatische Antriebseinheiten handeln.

Über die Antriebseinheiten 36 und 56 kann der Abstand der Seitenbürste 24 und der Radwaschbürste 48 längs der Behandlungsrichtung 14 voneinander verändert werden. Dabei kann vorgesehen sein, dass nur die Seitenbürste 24 relativ zur Trageinrichtung 16 verschoben wird, nur die Radwaschbürste 48 relativ zur Trageinrichtung 16 verschoben wird, oder dass sowohl die Seitenbürste 24 als auch die Radwaschbürste 48 relativ zur Trageinrichtung 16 verschoben werden.

Die Portalwaschanlage 10 umfasst eine Steuereinheit 58 (Figur 2), die mit den Bürsteneinrichtungen 22, 37 und 46 gekoppelt ist. Über die Steuereinheit 58 können die Antriebe 30, 32, 36, 42, 44, 50, 54 und 56 angesteuert werden. Insbesondere können die Antriebseinheiten 36 und 56 angesteuert werden, um die Seitenbürste 24 und die Radwaschbürste 48 längs der Behandlungsrichtung 14 in eine gewünschte Relativstellung zu bringen.

Die Funktionsweise der erfindungsgemäßen Portalwaschanlage 10 und die damit erzielbaren Vorteile werden nachfolgend unter Verweis zunächst auf die Figuren 3 bis 5 und unter Erläuterung eines vorteilhaften Ausführungsbeispiels eines erfindungsgemäßen Verfahrens erläutert.

Figur 3 zeigt ein zu reinigendes Kraftfahrzeug 60, das für die Dauer der Reinigung ortsfest auf der Aufstellfläche 12 positioniert ist. Das Kraftfahrzeug 60 weist Endseiten auf, nämlich eine Vorderseite 62 und eine Rückseite 64. Ferner weist das Kraftfahrzeug 60 Räder auf, nämlich Vorderräder 66 und Hinterräder 68. Hiervon ist in der Zeichnung nur ein jeweiliges Vorderrad 66 und ein jeweiliges Hinterrad 68 dargestellt.

Eine Bezugnahme auf nur ein Vorderrad 66 oder ein Hinterrad 68 gilt vorliegend als Bezugnahme auf beide Vorderräder 66 bzw. beide Hinterräder 68.

Die Bedienperson positioniert das Kraftfahrzeug 60 vor dem Reinigungsprogramm in geeigneter Solllage relativ zur Portalwaschanlage 10 (Figur 3). Vorliegend wird das Kraftfahrzeug 60 so zur Portalwaschanlage 10 orientiert, dass die Vorderseite 62 der Portalwaschanlage 10 zugewandt ist. Die Seitenbürsten 24 sind auf der dem Kraftfahrzeug 60 abgewandten Seite der Trageinrichtung 16 angeordnet.

Die Portalwaschanlage 10 umfasst eine Erfassungseinheit 70, die mit der Steuereinheit 58 gekoppelt ist. Mit der Erfassungseinheit 70 kann ermittelt werden, welche Relativposition ein Rad, vorliegend das Vorderrad 66, relativ zu einer Endseite, vorliegend der Vorderseite 62, einnimmt. Insbesondere kann der Abstand 72 des Vorderrades 66 von der Vorderseite 62 ermittelt werden. Dies kann beispielsweise dadurch erfolgen, dass die Lage einer Radachse 74 (Vorderachse) ermittelt wird und deren Abstand 72 von der Vorderseite 62 berechnet wird. Die diesbezügliche Information kann an die Steuereinheit 58 übertragen werden.

Auch eine andere Definition der Relativposition des Rades und der Endseite ist denkbar.

Die Erfassungseinheit 70 kann auf vielfältige Weise ausgestaltet sein. Beispielsweise ist die Erfassungseinheit 70 eine optische Erfassungseinheit, die mindestens eine Lichtschranke und/oder eine mindestens einen Lichtvorhang umfasst. Mit der optischen Erfassungseinheit wird vorzugsweise die Kontur des Kraftfahrzeugs 60 erfasst und darauf basierend der Abstand 72 berechnet.

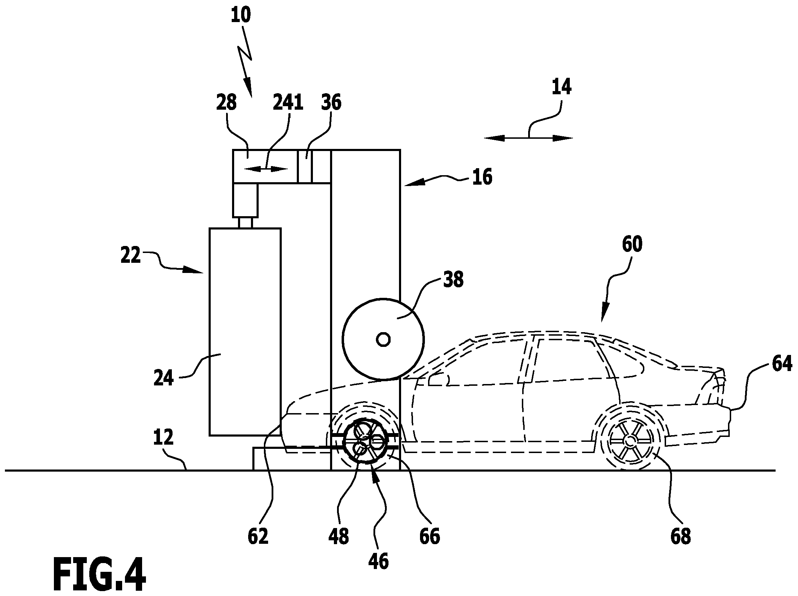

Figur 3 zeigt beispielhaft Positionen der Erfassungseinheit 70 (in den Figuren 4 bis 10 nicht dargestellt).

76 kennzeichnet beispielhaft die Position der optischen Erfassungseinheit 70 im Bereich einer Zufahrt 78 für die Portalwaschanlage 10. Befährt der Benutzer die Aufstellfläche 12, wird die Erfassungseinheit 70 passiert, wodurch die Kontur des Kraftfahrzeugs 60 ermittelt werden kann.

80 kennzeichnet beispielhaft die Position der optischen Erfassungseinheit oberhalb und/oder seitlich neben dem Kraftfahrzeug, um dessen Kontur zu erfassen. 82 kennzeichnet beispielhaft die Position der optischen Erfassungseinheit 70, wobei diese an der Trageinrichtung 16 gehalten ist.

Es kann zum Beispiel vorgesehen sein, dass das Kraftfahrzeug 60 vor einer Bürstenreinigung zunächst mit einer Reinigungsflüssigkeit beaufschlagt wird, beispielsweise besprüht wird. Dabei kann die Trageinrichtung 16 über das Kraftfahrzeug 60 hinweggefahren und mittels der Erfassungseinheit 70 die Kontur des Kraftfahrzeuges 60 erfasst und daraus der Abstand 72 ermittelt werden.

84 kennzeichnet beispielhaft die Position einer Erfassungseinheit 70, die ebenfalls an der Trageinrichtung 16 gehalten sein kann. Hierbei handelt es sich zum Beispiel um eine taktile Erfassungseinheit 70, um die Relativposition der Vorderseite 62 und des Vorderrades 66 tastend zu erfassen und daraus den Abstand 72 zu bestimmen.

Auch bei der taktilen Erfassungseinheit 70 kann vorgesehen sein, dass der Abstand 72 vor der Bürstenreinigung ermittelt wird, während die Trageinrichtung 16 über das Kraftfahrzeug 60 hinwegfährt und dieses mit einer Reinigungsflüssigkeit beaufschlagt wird.

Denkbar ist auch, dass über die Erfassungseinheit 70 der Typ des Kraftfahrzeuges erfasst wird. Beispielsweise ist an der Erfassungseinheit 70 eine Eingabeeinheit 86 vorgesehen, über die ein Benutzer vor dem Reinigungsprogramm eine Information betreffend den Typ des Kraftfahrzeuges 60 vorgibt. Anhand dieser Information kann zum Beispiel aus einer Speichereinheit 88 die Geometrie des Kraftfahrzeuges 60 ausgelesen werden und anhand dieser Information der Abstand 72 bestimmt werden.

Die Bestimmung des Typs des Kraftfahrzeuges 60 ist selbstverständlich auch möglich, wenn die Kontur des Kraftfahrzeuges 60 optisch und/oder taktil erfasst wird.

Denkbar ist auch, dass die Erfassungseinheit 70 drahtlos eine Information betreffend den Typ des Kraftfahrzeuges 60 übermittelt bekommt. Beispielsweise ist die Erfassungseinheit 70 ein RFID-Leser oder umfasst einen solchen, mit dem ein im Kraftfahrzeug 60 angeordnetes RFID-Tag ausgelesen wird, das eine Information betreffend den Typ des Kraftfahrzeuges 60 enthält.

Alternativ oder ergänzend kann vorgesehen sein, dass die Erfassungseinheit 70 einen Sensor aufweist, mit dem ein Motorstrom des Drehantriebs 30 detektiert werden kann. Während der Bürstenreinigung kann die Seitenbürste 24 in eine eingefahrene Stellung überführt werden. Kontaktiert die Seitenbürste 24 die Vorderseite 62, führt dies zu einer Steigerung des Motorstroms, weil die Reibung zwischen der Seitenbürste 24 und dem Kraftfahrzeug 60 erhöht ist. Mit einem weiteren Sensor der Erfassungseinheit 70, beispielsweise optisch und/oder taktil, kann die Position des Vorderrades 66 während der Bürstenreinigung erfasst werden. Dies gibt die Möglichkeit, ebenfalls den Abstand 72 zu bestimmen.

Vorstehend erläuterte Ausgestaltung erlaubt es, bei der Reinigung des Kraftfahrzeuges 60 gleichzeitig die Vorderseite 62 und die Vorderräder 66 zu reinigen.

Vor oder während der Bürstenreinigung kann beispielsweise die Antriebseinheit 36 abhängig vom Abstand 72 aktiviert werden, um die Seitenbürste 24 und die Radwaschbürste 48 in eine Relativstellung bezüglich der Behandlungsrichtung 14 zu bringen, so dass mit einem waschaktiven Bereich der Seitenbürste 24 die Vorderseite 62 abgereinigt werden kann, wenn die Seitenbürsten 24 eine eingefahrene Stellung einnehmen. Gleichzeitig kann mit der Radwaschbürste 48 gleichzeitig das Vorderrad 66 abgereinigt werden.

Wird die Radwaschbürste 48 selbst nicht über die Antriebseinheit 56 verschoben, bewegt sich die Trageinrichtung 16 bevorzugt längs der Behandlungsrichtung 14 an eine Position, in der eine möglichst gute Überdeckung der Kontur der Radwaschbürste 48 mit dem Vorderrad 66 vorliegt. Idealerweise sind die Drehachse 52 und die Radachse 74 koaxial zueinander ausgerichtet. Durch Verschieben der Seitenbürste 24 relativ zur Trageinrichtung 16, wie vorstehend erläutert, kann die Seitenbürste 24 zum Kontaktieren der Vorderseite 62 verschoben werden (Figur 4).

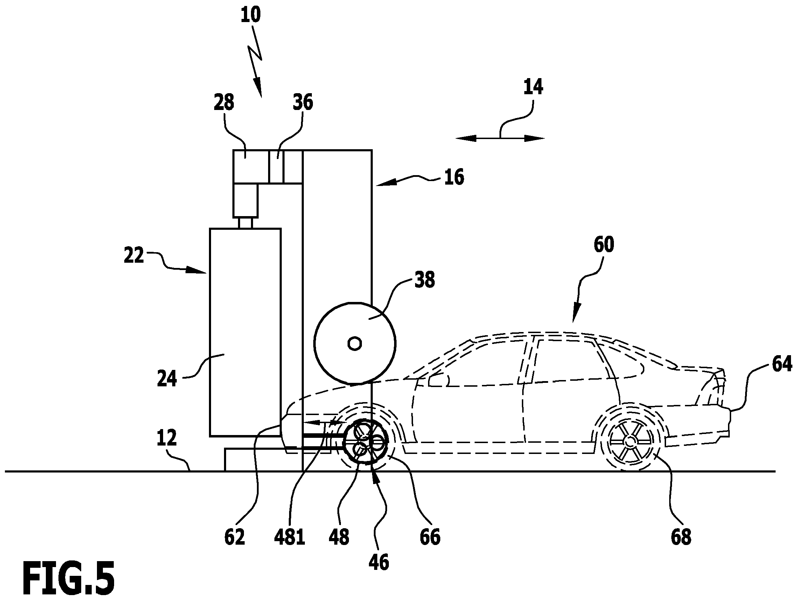

Alternativ kann vorgesehen sein, dass eine Bewegung der Seitenbürste 24 relativ zur Trageinrichtung 16 längs der Behandlungsrichtung 14 unterbleibt und die Trageinrichtung 16 so am Kraftfahrzeug 60 positioniert wird, dass ein waschaktiver Bereich der Seitenbürste 24 in deren eingefahrener Stellung die Vorderseite 62 kontaktiert. Durch Ansteuerung der Antriebseinheit 56 abhängig vom Abstand 72 kann die Radwaschbürste 48 so relativ zur Trageinrichtung 16 längs der Behandlungsrichtung verschoben werden, dass die Kontur der Radwaschbürste 48 möglichst gut mit dem Vorderrad 66 überdeckt. Idealerweise sind auch hier die Drehachse 52 und die Radachse 74 koaxial zueinander ausgerichtet (Figur 5).

Bei einer weiteren, in der Zeichnung nicht gezeigten Variante des Verfahrens ist selbstverständlich auch denkbar, dass sowohl die Antriebseinheit 36 als auch die Antriebseinheit 56 zum Bewegen der Seitenbürste 24 bzw. der Radwaschbürste 48 längs der Behandlungsrichtung 14 relativ zur Trageinrichtung 16 aktiviert werden.

Bei der erfindungsgemäßen Portalwaschanlage 10 ist die Möglichkeit gegeben, das Kraftfahrzeug 60 gleichzeitig an der Vorderseite 62 über die die eingefahrene Stellung einnehmenden Seitenbürsten 24 und an den Vorderrädern 66 über die Radwaschbürsten 48 zu reinigen. Da zum Reinigen der Vorderseite 60 üblicherweise eine gewisse Zeitdauer erforderlich ist, kann diese Zeitdauer zur gleichzeitigen Reinigung der Vorderräder 66 genutzt werden. Es ergibt sich eine Zeitersparnis, und die Gesamtdauer des Reinigungsprogrammes kann verringert werden. Außerdem kann dadurch, dass die Relativstellung der Seitenbürsten 24 und der Radwaschbürsten 48 gezielt an die Kontur und/oder den Typ des Kraftfahrzeuges 60 angepasst werden kann, das Reinigungsergebnis verbessert werden.

Bei der nachfolgenden Beschreibung werden für gleiche oder gleichwirkende Merkmale oder Bauteile der zum Einsatz kommenden Portalwaschanlage(n) bzw. der gezeigten Kraftfahrzeuge die bislang eingeführten Bezugszeichen beibehalten. Die vorstehend am Beispiel der Portalwaschanlage 10 und am Kraftfahrzeug 60 erläuterten Vorteile können bei den nachfolgenden Ausführungsformen ebenfalls erzielt werden, so dass diesbezüglich auf die voranstehenden Erläuterungen verwiesen werden kann.

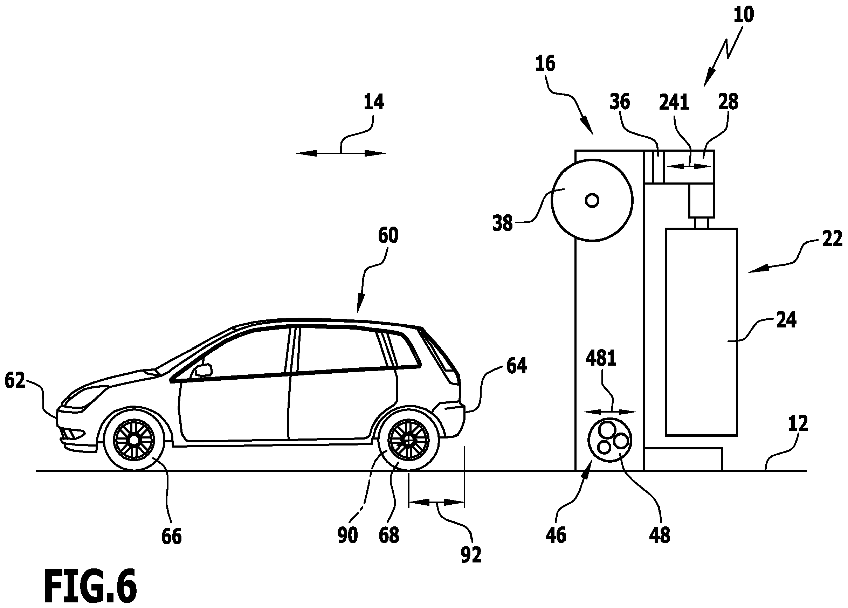

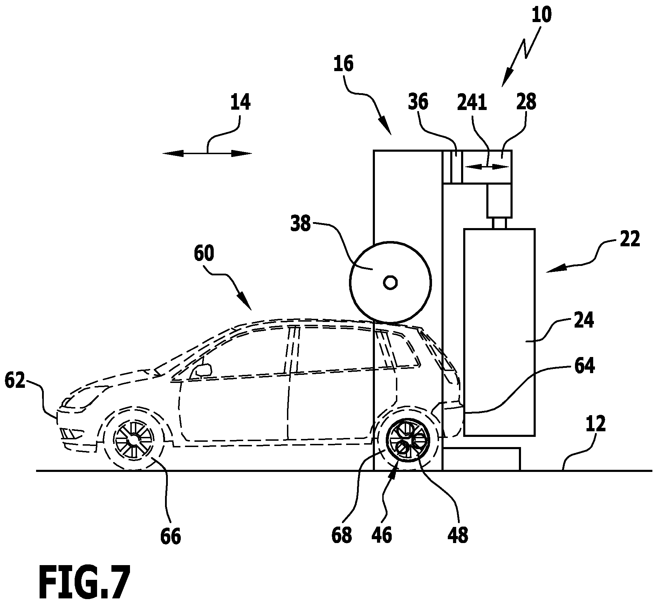

Die Figuren 6 und 7 zeigen die Portalwaschanlage 10 zum Reinigen eines Kraftfahrzeuges 60 in den Figuren 3 bzw. 4 entsprechenden Situationen. Anders als bei den Darstellungen gemäß den Figuren 3 bis 5 ist das Kraftfahrzeug 60 relativ zur Portalwaschanlage 10 in den Figuren 6 und 7 in umgekehrter Richtung orientiert. Dementsprechend weist die Rückseite 64 der Trageinrichtung 16 zu, und die Seitenbürsten 24 sind auf der dem Kraftfahrzeug 60 gegenüberliegenden Seite der Trageinrichtung 16 angeordnet.

Bei der Variante gemäß den Figuren 6 und 7 ist die Möglichkeit gegeben, ebenfalls eine Endseite des Kraftfahrzeuges 60 und Räder gleichzeitig abzureinigen. Und zwar werden gleichzeitig die Rückseite 64 mit den Seitenbürsten 24 in der eingefahrenen Stellung und die Hinterräder 68 mit den Radwaschbürsten 48 abgereinigt. Um sicherzustellen, dass die Seitenbürsten 24 die Rückseite 64 mit einem waschaktiven Bereich kontaktieren und zugleich eine möglichst gute Überdeckung der Kontur der Radwaschbürsten 48 mit den Hinterrädern 68 erfolgt (idealerweise eine koaxiale Ausrichtung der Drehachse 52 mit der Radachse 90 der Hinterräder) wird auch im vorliegenden Fall ein entsprechender Abstand 92 der Rückseite 64 und der Hinterräder 68 voneinander erfasst.

Figur 7 zeigt, wie nach Ansteuern der Antriebseinheit 36 eine Relativstellung der Seitenbürste 24 und der Radwaschbürste 48 bezüglich der Behandlungsrichtung 14 eingestellt wurde, so dass die Rückseite 64 und die Hinterräder 68 gleichzeitig abgereinigt werden können. Selbstverständlich ist es auch hier denkbar, dass statt der Seitenbürste 24 die Radwaschbürste 48 über die Antriebseinheit 56 relativ zur Trageinrichtung 16 bewegt wird oder dass sowohl die Seitenbürste 24 als auch die Radwaschbürste 48 relativ zur Trageinrichtung 16 bewegt werden.

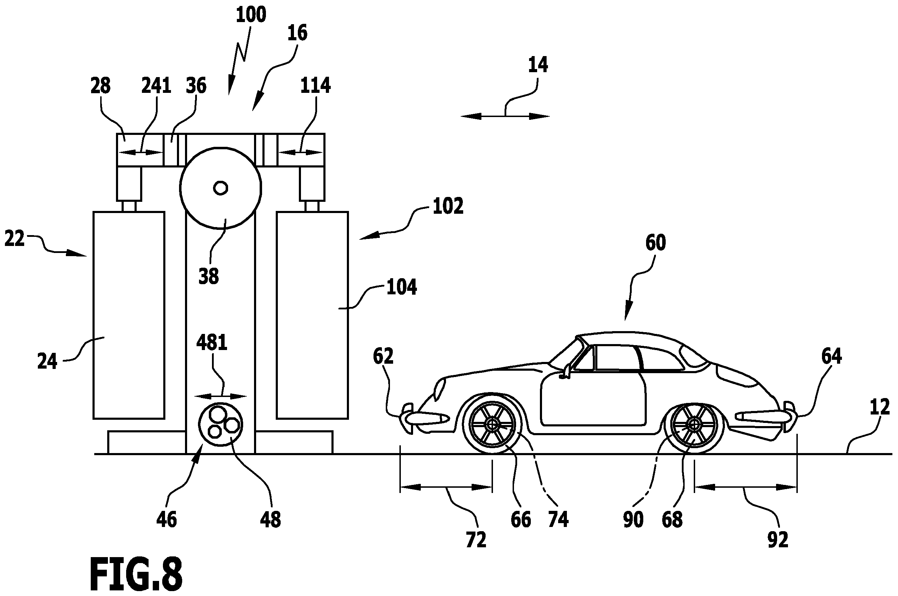

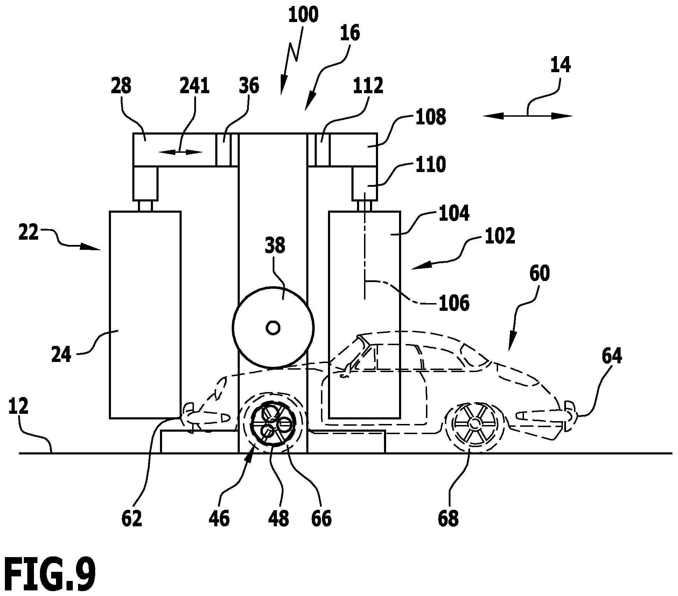

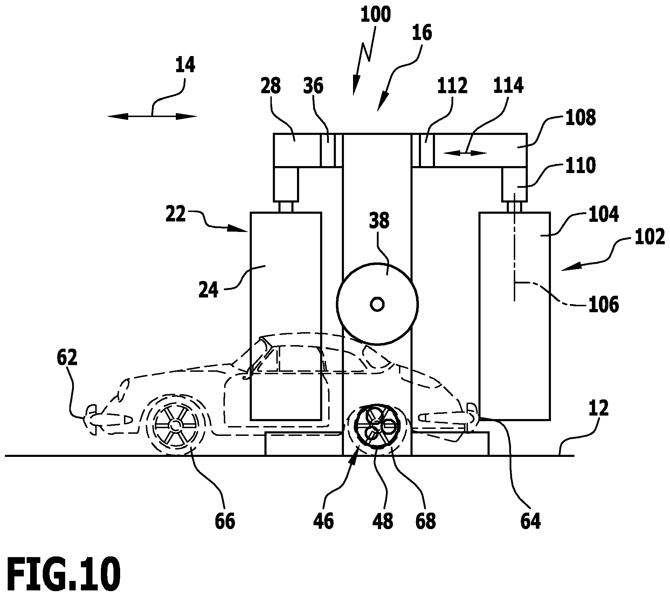

Die Figuren 8 bis 10 zeigen eine weitere, mit dem Bezugszeichen 100 belegte vorteilhafte Ausführungsform der erfindungsgemäßen Portalwaschanlage. Figur 8 entspricht einer Situation der Figur 3, Figur 9 der Figur 4 und Figur 10 der Figur 7.

Die Portalwaschanlage 100 weist zusätzlich zur Portalwaschanlage 10 zwei weitere Bürsteneinrichtungen 102 auf. Die Bürsteneinrichtungen 102 sind auf der der Bürsteneinrichtung 22 gegenüberliegenden Seite der Trageinrichtung 16 angeordnet. In Funktion und Aufbau entsprechen die Bürsteneinrichtungen 102 bevorzugt den Bürsteneinrichtungen 22. Dementsprechend kann jede Bürsteneinrichtung 102 eine Seitenbürste 104 aufweisen, die eine Drehachse 106 definiert, ein Halteteil 108, einen Drehantrieb 110, einen in der Zeichnung nicht gezeigten Verschiebeantrieb und eine Antriebseinheit 112. Die Seitenbürsten 104 sind längs der Behandlungsrichtung 14 bezüglich der Trageinrichtung verschieblich (Pfeil 114 in der Zeichnung).

Mit den Seitenbürsten 24 in deren eingefahrener Stellung kann die Vorderseite 62 gleichzeitig mit dem Abreinigen der Vorderräder 66 durch die Radwaschbürsten 48 gereinigt werden (Figur 9). Dies entspricht der in Figur 4 gezeigten Situation.

Die Rückseite 64 kann mit den Seitenbürsten 104 in deren eingefahrener Stellung gleichzeitig mit dem Abreinigen der Hinterräder 68 durch die Radwaschbürsten 48 gereinigt werden (Figur 10). Dies entspricht der in Figur 7 dargestellten Situation.

Die Figuren 9 und 10 zeigen Situationen, bei denen die Seitenbürsten 24 mittels der Antriebseinheiten 36 bzw. die Seitenbürsten 104 mittels der Antriebseinheiten 120 relativ zur Trageinrichtung 16 längs der Behandlungsrichtung 14 verschoben wurden. Selbstverständlich ist auch bei der Portalwaschanlage 100 die Möglichkeit gegeben, dass stattdessen die Radwaschbürsten 48 längs der Behandlungsrichtung 14 über die Antriebseinheiten 56 verschoben werden oder dass die Seitenbürsten 24 und die Radwaschbürsten 48 bzw. die Seitenbürsten 104 und die Radwaschbürsten 48 relativ zur Trageinrichtung 16 verschoben werden.

## Patentansprüche

1. Portalwaschanlage, die relativ zu einem zu reinigenden Kraftfahrzeug (60) längs einer Behandlungsrichtung (14) beweglich ist und eine portalförmige Trageinrichtung (16) aufweist, an der mindestens eine Karosseriebürste (24; 104) zum Reinigen einer Endseite (62, 64) des Kraftfahrzeuges (60) sowie mindestens eine Radwaschbürste (48) zum Reinigen eines Rades (66, 68) des Kraftfahrzeuges (60) gehalten sind, wobei die mindestens eine Karosseriebürste (24; 104) und/oder die mindestens eine Radwaschbürste (48) längs der Behandlungsrichtung (14) beweglich an der Trageinrichtung (16) gehalten und mit mindestens einer Antriebseinheit (36, 56; 112) relativ zur Trageinrichtung (16) beweglich ist/sind, **dadurch gekennzeichnet, dass** die mindestens eine Karosseriebürste (24; 104) und die mindestens eine Radwaschbürste (48) in eine Relativstellung bringbar sind, in der die Endseite (62, 64) des Kraftfahrzeuges (60) und das Rad (66, 68) des Kraftfahrzeuges (60) gleichzeitig reinigbar sind, welches Rad (66, 68) einer Radachse (74, 90) des Kraftfahrzeuges (60) zugeordnet ist, die der Endseite (62, 64) zugewandt ist.

2. Portalwaschanlage nach Anspruch 1, **dadurch gekennzeichnet, dass** die Portalwaschanlage (10; 100) so ausgebildet ist, das bei Reinigung einer vorderen Endseite (62) des Kraftfahrzeuges (60) mindestens ein Vorderrad (66) des Kraftfahrzeuges (60) gleichzeitig reinigbar ist und/oder dass bei Reinigung einer hinteren Endseite (64) des Kraftfahrzeuges (60) mindestens ein Hinterrad (68) des Kraftfahrzeuges (60) gleichzeitig reinigbar ist.

3. Portalwaschanlage nach einem der voranstehenden Ansprüche, **dadurch gekennzeichnet, dass** die mindestens eine Karosseriebürste (24; 104) und/oder die mindestens eine Radwaschbürste (48) in Behandlungsrichtung (14) relativ zur Trageinrichtung (16) verschiebbar ist/sind, beispielsweise verschiebbar an der Trageinrichtung (16) gelagert ist/sind.

4. Portalwaschanlage nach einem der voranstehenden Ansprüche, **dadurch gekennzeichnet, dass** die mindestens eine Karosseriebürste (24; 104) relativ zur Trageinrichtung (16) längs der Behandlungsrichtung (14) um bis zu 2 m beweglich ist und/oder die mindestens eine Radwaschbürste (48) relativ zur Trageinrichtung (16) um bis zu 1 m.

5. Portalwaschanlage nach einem der voranstehenden Ansprüche, **dadurch gekennzeichnet, dass** die mindestens eine Antriebseinheit (36, 56; 112) eine mechanische, elektrische, hydraulische, magnetische und/oder pneumatische Antriebseinheit (36, 56; 112) ist.

6. Portalwaschanlage nach einem der voranstehenden Ansprüche, **dadurch gekennzeichnet, dass** die mindestens eine Antriebseinheit (36, 56) so ausgebildet ist, dass die mindestens eine Karosseriebürste (24; 104) und/oder die mindestens eine Radwaschbürste (48) längs der Behandlungsrichtung (14) in unterschiedliche diskrete Abstände relativ zur Trageinrichtung (16) bringbar ist oder dass die Abstandsänderung der mindestens einen Karosseriebürste (24; 104) und/oder der mindestens einen Radwaschbürste (48) zur Trageinrichtung (16) längs der Behandlungsrichtung (14) stufenlos oder im Wesentlichen stufenlos veränderbar ist.

7. Portalwaschanlage nach einem der voranstehenden Ansprüche, **dadurch gekennzeichnet, dass** die Portalwaschanlage (10; 100) zwei Radwaschbürsten (48) aufweist, die an einander gegenüberliegenden Seiten bezogen auf eine Richtung quer zur Behandlungsrichtung (14) an der Trageinrichtung (16) angeordnet sind, wobei vorzugsweise beide Radwaschbürsten (48) in Behandlungsrichtung (14) relativ zur Trageinrichtung (16) beweglich sind.

8. Portalwaschanlage nach einem der voranstehenden Ansprüche, **dadurch gekennzeichnet, dass** die mindestens eine Karosseriebürste (24; 104) eine in Höhenrichtung ausgerichtete Seitenbürste (24; 104) ist, die an der Trageinrichtung (16) quer zur Behandlungsrichtung (14) einfahrbar und ausfahrbar ist, und mit der die Endseite (62, 64) des Kraftfahrzeuges (60) in einer eingefahrenen Stellung reinigbar ist.

9. Portalwaschanlage nach Anspruch 8, **dadurch gekennzeichnet, dass** die Portalwaschanlage (10; 100) zwei Seitenbürsten (24; 104) aufweist, die an einander gegenüberliegenden Seiten bezogen auf die Richtung quer zur Behandlungsrichtung (14) an der Trageinrichtung (16) gehalten sind und dass beide Seitenbürsten (24; 104) von einer jeweiligen eingefahrenen in eine jeweilige ausgefahrene Stellung bewegbar sind zum Reinigen der Endseite (62, 64) des Kraftfahrzeuges (60), wobei vorzugsweise beide Seitenbürsten (24; 104) in Behandlungsrichtung (14) relativ zur Trageinrichtung (16) beweglich sind.

10. Portalwaschanlage nach einem der voranstehenden Ansprüche, **dadurch gekennzeichnet, dass** die Portalwaschanlage (100) in Behandlungsrichtung (14) an einander gegenüberliegenden Seiten der mindestens einen Radwaschbürste (48) zwei Karosseriebürsten (24; 104) aufweist zum Reinigen einander abgewandter Endseiten (62, 64) des Kraftfahrzeuges (60) und dass mindestens eine Karosseriebürste (24; 104) längs der Behandlungsrichtung (14) beweglich an der Trageinrichtung (16) gehalten und mit einer jeweiligen Antriebseinheit (36, 112) relativ zu dieser beweglich ist.

11. Portalwaschanlage nach einem der voranstehenden Ansprüche, **dadurch gekennzeichnet, dass** die mindestens eine Karosseriebürste eine quer zur Behandlungsrichtung (14) ausgerichtete Dachbürste ist, die in einer Höhenrichtung der Trageinrichtung (16) anhebbar und absenkbar ist und mit der die Endseite (62, 64) des Kraftfahrzeuges (60) in einer abgesenkten Stellung reinigbar ist.

12. Portalwaschanlage nach einem der voranstehenden Ansprüche, **dadurch gekennzeichnet, dass** die Portalwaschanlage (10; 100) eine Steuereinheit (58) umfasst und eine mit dieser gekoppelte Erfassungseinheit (70), mit der ein Abstand (72, 92) der Endseite (62, 64) des Kraftfahrzeuges (60) und des Rades (66, 68) voneinander längs der Behandlungsrichtung (14) bestimmbar ist, und dass die Steuereinheit (58) mit der mindestens einen Antriebseinheit (36, 56; 112) gekoppelt ist und die Relativstellung der mindestens einen Karosseriebürste (24; 104) und der mindestens einen Radwaschbürste (48) bezüglich der Behandlungsrichtung (14) abhängig vom Abstand einstellbar ist.

13. Portalwaschanlage nach Anspruch 12, **dadurch gekennzeichnet, dass** der Abstand (72, 92) anhand eines erkannten oder vorgebbaren Typs des Kraftfahrzeuges (60) ermittelbar ist, wobei der Typ des Kraftfahrzeuges (60) mittels der Erfassungseinheit (70) erfassbar und/oder mittels einer mit der Erfassungseinheit (70) gekoppelten Eingabeeinheit (86) von einer Bedienperson vorgebbar ist.

14. Portalwaschanlage nach Anspruch 12 oder 13, **dadurch gekennzeichnet, dass** der Abstand (72, 92) vor Abarbeitung eines Reinigungsprogrammes und/oder während der Abarbeitung eines Reinigungsprogrammes der Portalwaschanlage (10; 100) bestimmbar ist.

15. Portalwaschanlage nach einem der Ansprüche 12 bis 14, **dadurch gekennzeichnet, dass** ein Motorstrom eines Drehantriebs (30; 110) der mindestens einen Karosseriebürste (24; 104) erfassbar und abhängig vom Motorstrom detektierbar ist, dass die Karosseriebürste (24; 104) die Endseite (62, 64) kontaktiert und dass mit einer bevorzugt optischen oder taktilen Erfassungseinheit die Position des Rades (66, 68) erfassbar und die Relativstellung der mindestens einen Karosseriebürste (24; 104) und der mindestens einen Radwaschbürste (48) bezüglich der Behandlungsrichtung (14) abhängig vom Signal der Erfassungseinheit einstellbar ist.

16. Verfahren zum Reinigen eines Kraftfahrzeuges mit einer Portalwaschanlage nach einem der voranstehenden Ansprüche, bei dem bei einem zu reinigenden Kraftfahrzeug ein Abstand der Endseite und des Rades des Kraftfahrzeuges voneinander längs der Behandlungsrichtung bestimmt wird und die Karosseriebürste und/oder die Radwaschbürste längs der Behandlungsrichtung relativ zur Trageinrichtung bewegt wird/werden und die Endseite sowie das Rad des Kraftfahrzeuges gleichzeitig gereinigt werden.

## Claims

1. Portal washing installation which is moveable along a treatment direction (14) relative to a motor vehicle (60) to be cleaned and has a portal-shaped support device (16) on which at least one vehicle body brush (24; 104) for cleaning an end side (62, 64) of the motor vehicle (60) and at least one wheel washing brush (48) for cleaning a wheel (66, 68) of the motor vehicle (60) are held, wherein the at least one vehicle body brush (24; 104) and/or the at least one wheel washing brush (48) is/are held on the support device (16) so as to be moveable along the treatment direction (14) and is/are moveable relative to the support device (16) with at least one drive unit (36, 56; 112), **characterized in that** the at least one vehicle body brush (24; 104) and the at least one wheel washing brush (48) are able to be brought into a relative position in which the end side (62, 64) of the motor vehicle (60) and the wheel (66, 68) of the motor vehicle (60) are simultaneously cleanable, which wheel (66, 68) is associated with a wheel axis (74, 90) of the motor vehicle (60) which is facing the end side (62, 64).

2. Portal washing installation in accordance with Claim 1, **characterized in that** the portal washing installation (10; 100) is configured such that at least one front wheel (66) of the motor vehicle (60) is simultaneously cleanable when cleaning a front end side (62) of the motor vehicle (60) and/or **in that** at least one rear wheel (68) of the motor vehicle (60) is simultaneously cleanable when cleaning a rear end side (64) of the motor vehicle (60).

3. Portal washing installation in accordance with any one of the preceding Claims, **characterized in that** the at least one vehicle body brush (24; 104) and/or the at least one wheel washing brush (48) is/are displaceable relative to the support device (16) in the treatment direction (14), for example is/are displaceably mounted on the support device (16).

4. Portal washing installation in accordance with any one of the preceding Claims, **characterized in that** the at least one vehicle body brush (24; 104) is moveable relative to the support device (16) along the treatment direction (14) by up to 2 m and/or the at least one wheel washing brush (48) relative to the support device (16) by up to 1 m.

5. Portal washing installation in accordance with any one of the preceding Claims, **characterized in that** the at least one drive unit (36, 56; 112) is a mechanical, electrical, hydraulic, magnetic, and/or pneumatic drive unit (36, 56; 112).

6. Portal washing installation in accordance with any one of the preceding Claims, **characterized in that** the at least one drive unit (36, 56) is configured such that the at least one vehicle body brush (24; 104) and/or the at least one wheel washing brush (48) is able to be brought along the treatment direction (14) into different discrete spacings relative to the support device (16) or **in that** the spacing change of the at least one vehicle body brush (24; 104) and/or the at least one wheel washing brush (48) to the support device (16) is steplessly or substantially steplessly variable along the treatment direction (14).

7. Portal washing installation in accordance with any one of the preceding Claims, **characterized in that** the portal washing installation (10; 100) has two wheel washing brushes (48) which are arranged on the support device (16) on opposite sides with respect to a direction transverse to the treatment direction (14), wherein preferably both wheel washing brushes (48) are moveable relative to the support device (16) in the treatment direction (14).

8. Portal washing installation in accordance with any one of the preceding Claims, **characterized in that** the at least one vehicle body brush (24; 104) is a side brush (24; 104) which is aligned in the height direction, is retractable and extendable transverse to the treatment direction (14) on the support device (16), and with which the end side (62, 64) of the motor vehicle (60) is cleanable in a retracted position.

9. Portal washing installation in accordance with Claim 8, **characterized in that** the portal washing installation (10; 100) has two side brushes (24; 104) which are held on the support device (16) on opposite sides with respect to the direction transverse to the treatment direction (14), and **in that** both side brushes (24; 104) are moveable from a respective retracted position into a respective extended position for cleaning the end side (62, 64) of the motor vehicle (60), wherein preferably both side brushes (24; 104) are moveable relative to the support device (16) in the treatment direction (14).

10. Portal washing installation in accordance with any one of the preceding Claims, **characterized in that** the portal washing installation (100) in the treatment direction (14) has two vehicle body brushes (24; 104) on opposite sides of the at least one wheel brush (48) for cleaning opposing end sides (62, 64) of the motor vehicle (60) and **in that** at least one vehicle body brush (24; 104) is held on the support device (16) so as to be moveable, with a respective drive unit (36, 112), along the treatment direction (14), relative to the support device (16).

11. Portal washing installation in accordance with any one of the preceding Claims, **characterized in that** the at least one vehicle body brush is a roof brush which is aligned transverse to the treatment direction (14) and which is raisable and lowerable in a height direction of the support device (16) and with which the end side (62, 64) of the motor vehicle (60) cleanable in a lowered position.

12. Portal washing installation in accordance with any one of the preceding Claims, **characterized in that** the portal washing installation (10; 100) comprises a control unit (58) and a detection unit (70) coupled thereto, with which a distance (72, 92) of the end side (62, 64) of the motor vehicle (60) and the wheel (66, 68) from each other along the treatment direction (14) is determinable, and **in that** the control unit (58) is coupled to the at least one drive unit (36, 56; 112) and the relative position of the at least one vehicle body brush (24; 104) and the at least one wheel washing brush (48) in relation to the treatment direction (14) is adjustable depending on the distance.

13. Portal washing installation in accordance with Claim 12, **characterized in that** the distance (72, 92) is identifiable using a recognized or specifiable type of the motor vehicle (60), wherein the type of the motor vehicle (60) is detectable by means of the detection unit (70) and/or is specifiable by an operator by means of an input unit (86) coupled to the detection unit (70).

14. Portal washing installation in accordance with Claim 12 or 13, **characterized in that** the distance (72, 92) is determinable before execution of a cleaning program and/or during the execution of a cleaning program of the portal washing installation (10; 100).

15. Portal washing installation in accordance with any one of Claims 12 to 14, **characterized in that** a motor current of a rotary drive (30; 110) of the at least one vehicle body brush (24; 104) is detectable and that it is capturable, depending on the motor current, that the vehicle body brush (24; 104) contacts the end side (62, 64), and **in that** the position of the wheel (66, 68) is detectable with a preferably optical or tactile detection unit and the relative position of the at least one vehicle body brush (24; 104) and the at least one wheel washing brush (48) is adjustable in relation to the treatment direction (14) depending on the signal from the detection unit.

16. Method for cleaning a motor vehicle with a portal washing installation in accordance with any one of the preceding Claims, in which in a motor vehicle to be cleaned, a spacing of the end side and the wheel of the motor vehicle from each other along the treatment direction is determined and the vehicle body brush and/or the wheel washing brush is/are moved relative to the support device along the treatment direction and the end side as well as the wheel of the motor vehicle are simultaneously cleaned.

## Revendications

1. Installation de lavage à portique, qui est mobile par rapport à un véhicule à moteur (60) à nettoyer le long d'une direction de traitement (14) et qui présente un dispositif de support (16) en forme de portique, sur lequel sont retenues au moins une brosse de carrosserie (24 ; 104) destinée à nettoyer un côté d'extrémité (62, 64) du véhicule à moteur (60) ainsi qu'au moins une brosse de lavage de roue (48) destinée à nettoyer une roue (66, 68) du véhicule à moteur (60), dans lequel la au moins une brosse de carrosserie (24 ; 104) et/ou la au moins une brosse de lavage de roue (48) sont retenues sur le dispositif de support (16) de façon mobile le long de la direction de traitement (14) et sont mobiles par rapport au dispositif de support (16) au moyen d'au moins une unité d'entraînement (36, 56 ; 112), **caractérisée en ce que** la au moins une brosse de carrosserie (24 ; 104) et la au moins une brosse de lavage de roue (48) peuvent être amenées dans une position relative, dans laquelle le côté d'extrémité (62, 64) du véhicule à moteur (60) et la roue (66, 68) du véhicule à moteur (60) peuvent être nettoyés simultanément, laquelle roue (66, 68) est associée à un essieu (74, 90) du véhicule à moteur (60) qui est tourné vers le côté d'extrémité (62, 64).

2. Installation de lavage à portique selon la revendication 1, **caractérisée en ce que** l'installation de lavage à portique (10 ; 100) est conçue de sorte que, lors du nettoyage d'un côté d'extrémité avant (62) du véhicule à moteur (60), au moins une roue avant (66) du véhicule à moteur (60) peut être nettoyée simultanément et/ou **en ce que** lors du nettoyage d'un côté d'extrémité arrière (64) du véhicule à moteur (60), au moins une roue arrière (68) du véhicule à moteur (60) peut être nettoyée simultanément.

3. Installation de lavage à portique selon l'une quelconque des revendications précédentes, **caractérisée en ce que** la au moins une brosse de carrosserie (24 ; 104) et/ou la au moins une brosse de lavage de roue (48) peut/peuvent coulisser dans la direction de traitement (14) par rapport au dispositif de support (16), par exemple est montée/sont montées de manière à pouvoir coulisser sur le dispositif de support (16).

4. Installation de lavage à portique selon l'une quelconque des revendications précédentes, **caractérisée en ce que** la au moins une brosse de carrosserie (24 ; 104) est mobile jusqu'à 2 m par rapport au dispositif de support (16) le long de la direction de traitement (14) et/ou la au moins une brosse de lavage de roue (48) est mobile jusqu'à 1 m par rapport au dispositif de support (16).

5. Installation de lavage à portique selon l'une quelconque des revendications précédentes, **caractérisée en ce que** la au moins une unité d'entraînement (36, 56 ; 112) est une unité d'entraînement (36, 56 ; 112) mécanique, électrique, hydraulique, magnétique et/ou pneumatique.

6. Installation de lavage à portique selon l'une quelconque des revendications précédentes, **caractérisée en ce que** la au moins une unité d'entraînement (36, 56) est conçue de sorte que la au moins une brosse de carrosserie (24 ; 104) et/ou la au moins une brosse de lavage de roue (48) peuvent être amenées le long de la direction de traitement (14) suivant différents écarts discrets par rapport au dispositif de support (16) ou **en ce que** l'écart entre la au moins une brosse de carrosserie (24 ; 104) et/ou la au moins une brosse de lavage de roue (48) par rapport au dispositif de support (16) le long de la direction de traitement (14) peut être modifié de manière continue ou sensiblement continue.

7. Installation de lavage à portique selon l'une quelconque des revendications précédentes, **caractérisée en ce que** l'installation de lavage à portique (10 ; 100) comprend deux brosses de lavage de roue (48), qui sont agencées sur des côtés opposés les uns aux autres par rapport à une direction transversale à la direction de traitement (14) sur le dispositif de support (16), dans lequel de préférence les deux brosses de lavage de roue (48) sont mobiles dans la direction de traitement (14) par rapport au dispositif de support (16).

8. Installation de lavage à portique selon l'une quelconque des revendications précédentes, **caractérisée en ce que** la au moins une brosse de carrosserie (24 ; 104) est une brosse latérale (24 ; 104) orientée dans le sens de la hauteur, qui peut être rentrée et sortie sur le dispositif de support (16) transversalement à la direction de traitement (14), et au moyen de laquelle le côté d'extrémité (62, 64) du véhicule à moteur (60) peut être nettoyé lorsqu'elle se trouve dans une position rentrée.

9. Installation de lavage à portique selon la revendication 8, **caractérisée en ce que** l'installation de lavage à portique (10 ; 100) comprend deux brosses latérales (24 ; 104), qui sont retenues sur des côtés opposés les uns aux autres par rapport à la direction transversale à la direction de traitement (14) sur le dispositif de support (16) et **en ce que** les deux brosses latérales (24 ; 104) peuvent être déplacées d'une position rentrée respective dans une position sortie respective pour le nettoyage du côté d'extrémité (62, 64) du véhicule à moteur (60), dans lequel de préférence les deux brosses latérales (24 ; 104) sont mobiles dans la direction de traitement (14) par rapport au dispositif de support (16).

10. Installation de lavage à portique selon l'une quelconque des revendications précédentes, **caractérisée en ce que** l'installation de lavage à portique (100) comprend dans la direction de traitement (14) sur des côtés opposés l'un à l'autre de la au moins une brosse de lavage de roue (48) deux brosses de carrosserie (24 ; 104) pour le nettoyage des côtés d'extrémité (62, 64) opposés l'un à l'autre du véhicule à moteur (60) et **en ce qu'**au moins une brosse de carrosserie (24 ; 104) est retenue mobile sur le dispositif de support (16) le long de la direction de traitement (14) et est mobile par rapport à celui-ci au moyen d'une unité d'entraînement (36, 112) respective.

11. Installation de lavage à portique selon l'une quelconque des revendications précédentes, **caractérisée en ce que** la au moins une brosse de carrosserie est une brosse de toit orientée transversalement à la direction de traitement (14), qui peut être levée et baissée dans le sens de la hauteur du dispositif de support (16) et au moyen de laquelle le côté d'extrémité (62, 64) du véhicule à moteur (60) peut être nettoyé lorsqu'elle se trouve dans une position baissée.

12. Installation de lavage à portique selon l'une quelconque des revendications précédentes, **caractérisée en ce que** l'installation de lavage à portique (10 ; 100) comporte une unité de commande (58) et une unité de détection (70) couplée à celle-ci, au moyen de laquelle un écart (72, 92) entre le côté d'extrémité (62, 64) du véhicule à moteur (60) et la roue (66, 68) le long de la direction de traitement (14) peut être déterminé, et **en ce que** l'unité de commande (58) est couplée à la au moins une unité d'entraînement (36, 56 ; 112) et la position relative de la au moins une brosse de carrosserie (24 ; 104) et de la au moins une brosse de lavage de roue (48) par rapport à la direction de traitement (14) peut être réglée en fonction de l'écart.

13. Installation de lavage à portique selon la revendication 12, **caractérisée en ce que** l'écart (72, 92) peut être déterminé sur la base d'un type identifié ou pouvant être prédéfini du véhicule à moteur (60), dans lequel le type du véhicule à moteur (60) peut être détecté au moyen de l'unité de détection (70) et/ou peut être prédéfini par un utilisateur au moyen d'une unité de saisie (86) couplée à l'unité de détection (70).

14. Installation de lavage à portique selon la revendication 12 ou 13, **caractérisée en ce que** l'écart (72, 92) peut être déterminé avant l'exécution d'un programme de nettoyage et/ou pendant l'exécution d'un programme de nettoyage de l'installation de lavage à portique (10 ; 100).

15. Installation de lavage à portique selon l'une quelconque des revendications 12 à 14, **caractérisée en ce qu'**un courant de moteur d'un entraînement rotatif (30 ; 110) de la au moins une brosse de carrosserie (24 ; 104) peut être détecté et **en ce qu'**il peut être constaté, en fonction du courant de moteur, que la brosse de carrosserie (24 ; 104) est en contact avec le côté d'extrémité (62, 64), et **en ce que** la position de la roue (66, 68) peut être détectée au moyen d'une unité de détection de préférence optique ou tactile et la position relative de la au moins une brosse de carrosserie (24 ; 104) et de la au moins une brosse de lavage de roue (48) par rapport à la direction de traitement (14) peut être réglée en fonction du signal de l'unité de détection.

16. Procédé de nettoyage d'un véhicule à moteur au moyen d'une installation de lavage à portique selon l'une quelconque des revendications précédentes, selon lequel, avec un véhicule à moteur à nettoyer, un écart entre le côté d'extrémité et la roue du véhicule à moteur le long de la direction de traitement est déterminé et la brosse de carrosserie et/ou la brosse de lavage de roue sont déplacées le long de la direction de traitement par rapport au dispositif de support et le côté d'extrémité ainsi que la roue du véhicule à moteur sont nettoyés simultanément.
